# EUROPEAN PATENT SPECIFICATION

(11) **EP 1 280 034 B1**
(45) Date of publication and mention of the grant of the patent: **22.09.2004**
(21) Application number: 02077862.7
(22) Date of filing: 15.07.2002
(51) Int. Cl.: G05G 1/14

(54) **Device for adjusting the position of a pedal**
Einstellvorrichtung zum Verstellen der Lage eines Pedals
Dispositif pour ajuster la position d'une pédale

(30) Priority: 27.07.2001 IT TO20010754
(43) Date of publication of application: 29.01.2003
(73) Proprietor: Ergom Holding S.p.a., 10071 Borgaro Torinese (Torino) (IT)
(72) Inventor: Cimminelli, Francesco, 10143 Torino (IT); Specchio, Michele, 10092 Beinasco, Frazione Borgaretto (TO) (IT); Giaccaria, Flavio, 10093 Collegno (TO) (IT)
(74) Representative: Cian, Paolo

(56) References cited:
- EP-A- 0 363 546
- EP-A- 0 936 527
- US-A1- 2001 013 262

## Description

The present invention generally refers to pedals for controlling the motion of vehicles, for example of motorcars.

In the pedal unit which are installed in motorcars, the arrangement, the travel and the operating angles of the pedals are set according to the space available in the area in which they have to be assembled, to the characteristics of operation of the systems controlled by them, such as the braking system, the clutch and the accelerator, as well as to the static and dynamic ergonomics of the lower limbs of the driver.

The pedals are usually associated to a support, generally in the form of a plate, which is fixed to the body of the vehicle for example at the location of a partition wall which separates the passenger compartment and the front compartment of the vehicle, such as the engine compartment, and their position and their travel can be only modified as a result of adjusting and setup operations carried out by means of tools when the vehicle is at a standstill.

Devices have been recently proposed for allowing the driver to electrically adjust the rest position of the pedals by means of control members accessible from the inside of the passenger compartment, in order to define a position of the pedals which may allow to each driver to assume a more comfortable driving position with reference to his or her characteristic body dimensions. In particular, these known devices allow to vary the distance between the driver torso and the pedals in a manner substantially independent of the distance between the torso and the steering wheel, in addition to the possibility to vary the pedal angles and their distances according to other degrees of freedom.

More particularly, the invention refers to a device for adjusting the position of a pedal of a vehicle, comprising:
- a pedal having a lower operating end and an upper end opposite to the operating end, to which a first pivot pin is associated,
- a lever having a first end to which a second pivot pin parallel to said first pin is associated, and a second end opposite to the first end and connected to a control member of a control device of the vehicle,
- a stem for the articulated connection of the upper end of the pedal and of the first end of the lever through said first and second pin, and
- position control means interposed between the lever and the pedal, which are adapted to cause a movement of the pedal with respect to the lever and which comprise a screw associated to the pedal and to the lever.

A device of the type defined above is known from EP-936 527. In this known device, the pedal is articulated at its upper end, to which a stem is associated, with a fulcrum portion fixed to the body of the vehicle, to which also a lever element is articulated. A screw is interposed between the pedal and the lever element, the screw having a head end rotatably connected to the lever and its shank in engagement with a nut screw articulated to the pedal. As a consequence of this structure, the rotation of the screw about its own axis causes the pedal to swing about its fulcrum. In particular, when the screw is rotated in order to approach the operating end of the pedal to the driver for compensating a short length of his lower limbs, this end of the pedal undergoes also an upward movement. This movement moves it away from the floor of the passenger compartment, so that the reaching of the operating end of the pedal by the foot of the driver becomes more difficult, in consideration of the fact that shorter lower limbs usually corresponds to shorter feet.

In order to overcome this drawback, the subject of the invention is a device of the type defined above, characterized in that the pedal and the lever have respective fulcra interposed between their opposite ends, the screw being connected to the pedal and to the lever at a zone close to said fulcra and being rotatably mounted with respect to a guide structure fixed to the vehicle body and defining a translation direction of the fulcra, so that the rotation of the screw causes a movement of the fulcrum of the pedal and of the fulcrum of the lever in the same direction with respect to the translation axis, the amount of the movement of the fulcrum of the pedal being greater than the amount of the movement of the fulcrum of the lever.

By virtue of this idea of solution, the device of the invention allows to move the pedal during the adjustment of its rest position in such a way that it remains substantially parallel to itself, so that the distance of its operating end does not vary in an appreciable manner with respect to the floor of the passenger compartment. Moreover, the point of connection between the adjusting device of the invention and the control device of the vehicle which is controlled through the pedal, remains substantially constant and the operating ratio of the pedal, that is the ratio between the travel of the operating end of the pedal and the travel of the point of articulation of a control member connected to the control device, remains substantially constant when the adjustment of the pedal position varies, so that the force applied to the pedal by the driver and the operating travel of the same are substantially independent of the set up adjustment.

According to a preferred feature of the invention, the screw is fixed axially to the guide structure and has two different threads respectively in engagement with a first nut screw articulated in proximity of the pedal fulcrum and with a second nut screw in proximity of the lever fulcrum, the thread engaging the first screw nut having a pitch greater than that of the thread engaging the second nut screw.

By virtue of such features the device of the invention turns out to be particularly safe and reliable in the use and its components are relatively little cumbersome, to full advantage of the space available to the driver of the vehicle.

As an alternative, and according to another preferred feature, the screw is axially movable with respect to the guide structure and has two different threads respectively in engagement with a first nut screw fixed to the guide structure and with a second nut screw articulated in proximity of the lever fulcrum, the screw having a free end connected in an articulated manner in proximity to the fulcrum of the pedal, the thread engaging the second nut screw having a smaller pitch and an opposite thread winding direction with respect to the thread engaging the first nut screw.

The invention furthermore relates to a pedal unit provided with at least a pedal having an adjusting device of the type defined above.

Further characteristics of the invention will become more clearly evident from the detailed description which follows, given purely by way of a not limitative example and referred to the attached drawings, in which:
figure 1 is a side elevational view showing a first adjusting position of a vehicle pedal in continuous line and another possible position of adjusting of the pedal in broken line,
figure 2 is a view similar to that of figure 1, longitudinally sectioned according to an axial plane of the device,

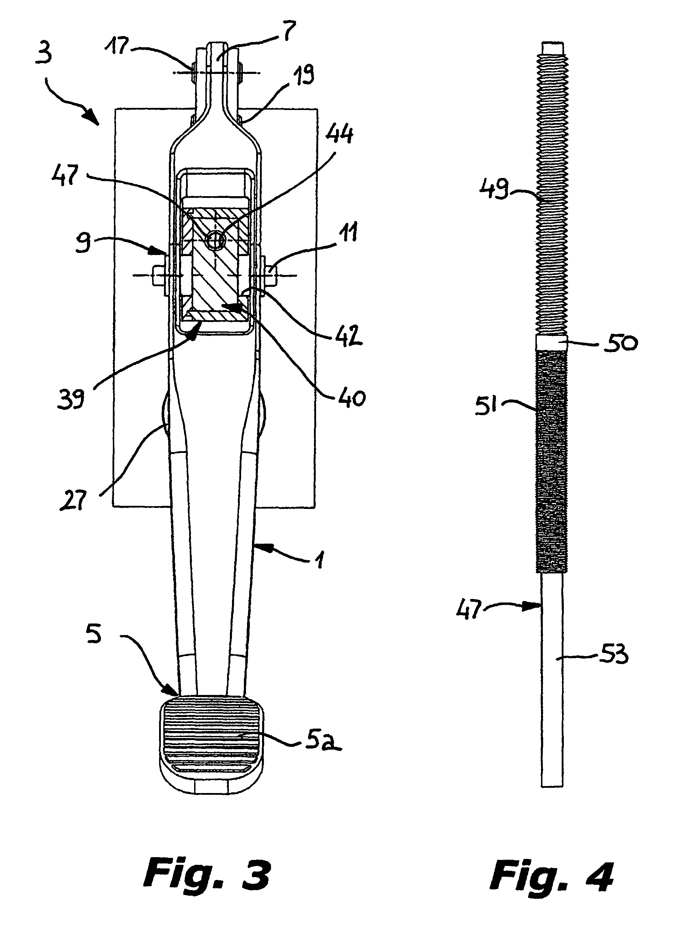

figure 3 is a front elevational sectioned schematic view, as seen from the arrow III of figure 1, and
figure 4 is a side elevational enlarged view of a detail indicated by the arrow IV in figure 2.

With reference to the figures, a device for adjusting the position of a pedal 1 is indicated in general with the reference 3.

The pedal 1, for example intended to control a braking or a clutch unit of a motor vehicle, has an elongated body, typically made of a metallic material in the case of a brake pedal or typically made of a plastic or metallic material in the case of a clutch pedal, having a lower end 5 provided with an operating plate 5a, and an upper end 7. Between the ends 5 and 7 a fulcrum zone 9 is defined, at which a block 13 having a parallelepipedal shape, which will be referred to in further detail in the following, is articulated by means of a transversal pivot pin 11.

A first end of a stem 15 is articulated to the upper end 7 of the pedal 1 by a pin 17, the second end of the stem 15 being articulated through a pin 19, parallel to the pin 17, at the upper end 21 of a rocking lever 23.

The lever 23 has in turn a lower end 25 connected in an articulated manner by means of a pin 27 at an end of a control member 29, which is constituted for example by a stem extending into the passenger compartment of the vehicle through a partition wall 31 frontally delimitating the passenger compartment. The member 29 is then connected in a manner known per se to a control device of the vehicle such as a servo brake, by means of a driving push rod, or to a clutch unit of the engine. In the latter case, the mechanism usually comprises a spring having the function of assisting the control, which is not illustrated in the figures since it is of a type known to the skilled person.

Between the ends 21 and 25 of the lever 23 a fulcrum zone 33 is defined, at which a block 37 of parallelepipedal shape is articulated through a pivot pin 35 passing through the lever 21, the block 37 being analogous to the block 13 mentioned above.

Both the blocks 13 and 37 are slidably contained within a guide structure 39 which extends cantilevered from a pedal unit plate 41, usually made of plastic material with stiffening ribs. The plate 41 is connected to the partition wall 31 by fixing members (not illustrated) and usually supports a plurality of pedals for controlling the vehicle.

The guide structure 39 has a rectilinear hollow seat 40 the shape of which corresponds to the cross-section of the blocks 13 and 37, which defines a direction of translation for such blocks. A pair of slits 42 parallel to the aforesaid direction of translation are formed in the structure 39 at both sides of the seat 40, in which respective portions of the pins 11 and 35 are slidably arranged, in order to facilitate the movement of the fulcra 9 and 33 along the cavity 40.

A respective threaded through hole 43, 45 is formed in both blocks 13 and 37, each hole being engaged by a corresponding thread of a screw 47 connected axially to the structure 39 and having its axis parallel to the direction of translation defined by such a structure. The screw 47 has two contiguous threaded portions 49 and 51 having the same thread winding direction but different pitch, which are separated from each other by an intermediate collar 50. The threaded portions 49 and 51 engage corresponding threads 44 and 46 of the holes 43 and 45.

A control portion 53, intended to be connected to an electric motor M through connection means known per se, for example constituted by a flexible transmission cable, extends at an end of the screw 47. Preferably, the motor M is installed outside the passenger compartment, typically within the engine compartment, and therefore on the side of the partition wall 31 opposite to that to which the device 1 is connected, in order to reduce noises and the busy space in the passenger compartment.

The thread 51 has a pitch smaller than that of the thread 49, whereby the rotation of the screw 47 causes a movement of the block 37 which is less than that of the block 13. In particular, the ratio between the pitch of the thread 49 and the pitch of the thread 51, that is of the corresponding threads 44 and 46 of the holes 43 and 45, falls within the range between 1.5 and 3.5, and preferably has the approximate value of 2.25.

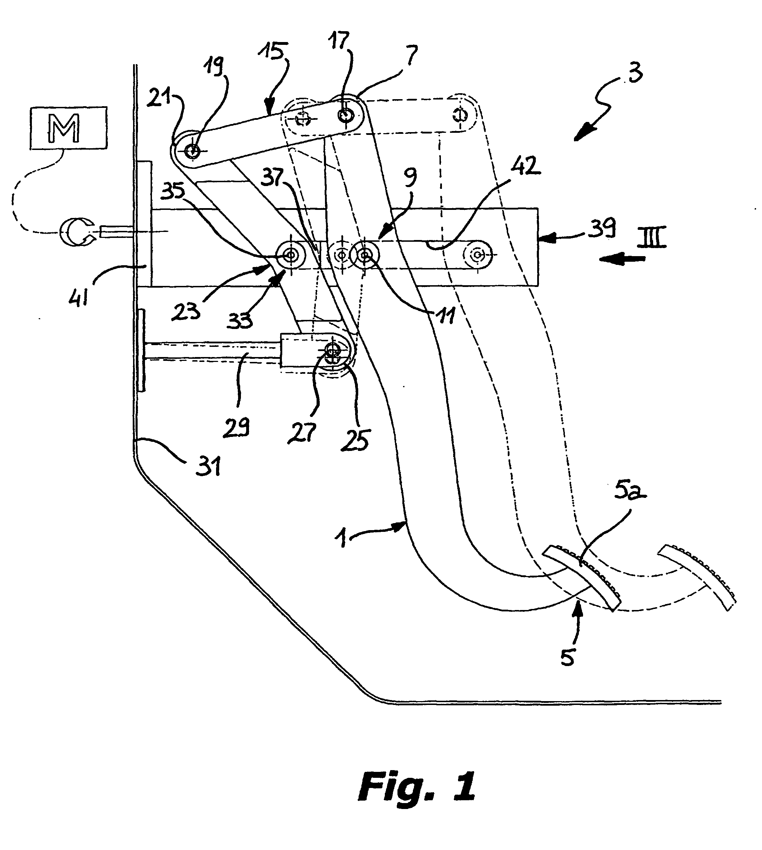

As a consequence of the rotation of the screw 47 about its axis, which is caused by the operation of the electric motor M, the blocks 13 and 37 slide in the same direction with respect to the guide structure 39, the respective movements being different owing to the different pitch of the threads 49 and 51. In particular, when the rotation of the screw 47 is such as to cause the blocks 13 and 37 to move away from the partition 31, the fulcrum zone 9 of the pedal 1 moves away from the fulcrum zone 33 of the lever 23, while the pin 27 substantially remains in a fixed position. In this manner, also if the position of the pedal 1 changes, the travel of the control member 29 does not change, since it remains substantially constant and independent of the adjustment of the position of the pedal. This fact is well evident in figure 1 where the extreme adjustment positions of the pedal 1 are respectively illustrated in continuous lines and in broken lines, which respectively correspond to the position closest to the partition wall 31 and to the position farthest from it. Passing from the one to the other of such extreme adjustment positions a slight variation of the height of the pin 27 is owed to the rotation of the end 25 of the lever 23 about the fulcrum 33, which involves a variation of the slant of the member 29 less than 3° with respect to the nominal position, and that therefore does not have any influence on the operation of the relative control device of the vehicle.

In the general case in which a same pedal unit carries several pedals associated to a device for adjusting their rest position, the motor M is conveniently used for controlling simultaneously the movement of the pedals through transmission means which are not illustrated since they are at the reach of the skilled person, which may comprise gearwheels connected by shafts in order to transmit the movement of the motor M to the cables connected to the screws for moving the various pedals. In this manner, only a single motor M can be used in order to obtain a synchronized movement of all the pedals.

As an alternative to the embodiment of the device according to the invention described above and illustrated in the figures, it is possible to obtain a cinematic behavior quite analogous by using a structure slightly different and not illustrated in the drawings, a short description of which is provided in the following since it falls within the scope of the appended claims. In this case, the screw has still two different threads one of which, having a larger pitch, engages a nut screw fixed to a guide structure analogous to the structure 39, in proximity of the pedal unit plate, in order that the screw is axially movable with respect to the guide structure in consequence to its rotation above its own axis. The other thread of the screw, having an opposite thread winding direction and a smaller pitch, engages a second nut screw articulated in proximity of the rocking lever fulcrum, which therefore corresponds to the thread 46 of the block 37 described above. This nut screw is slidably associated to the guide structure mentioned above. The free end of the screw, at the opposite side of the pedal unit plate, is connected in an articulated manner through a hinge in proximity of the fulcrum zone of the pedal.

In this way, an axial movement of the second nut screw is obtained as a result of the rotation of the screw, with respect to the nut screw fixed in proximity of the pedal unit plate, and therefore a movement of the same amount of the fulcrum zone of the pedal is obtained. Moreover, a movement of the nut screw associated to the fulcrum zone of the rocking lever is obtained as a result of the rotation of the screw. As a result, a movement of the fulcrum zone of the pedal and of the fulcrum zone of the rocking lever in the same direction is still obtained, the amounts of which are different depending on the relation between the pitches of the two threads, whereby the operation of the adjusting device is quite analogous to that previously described.

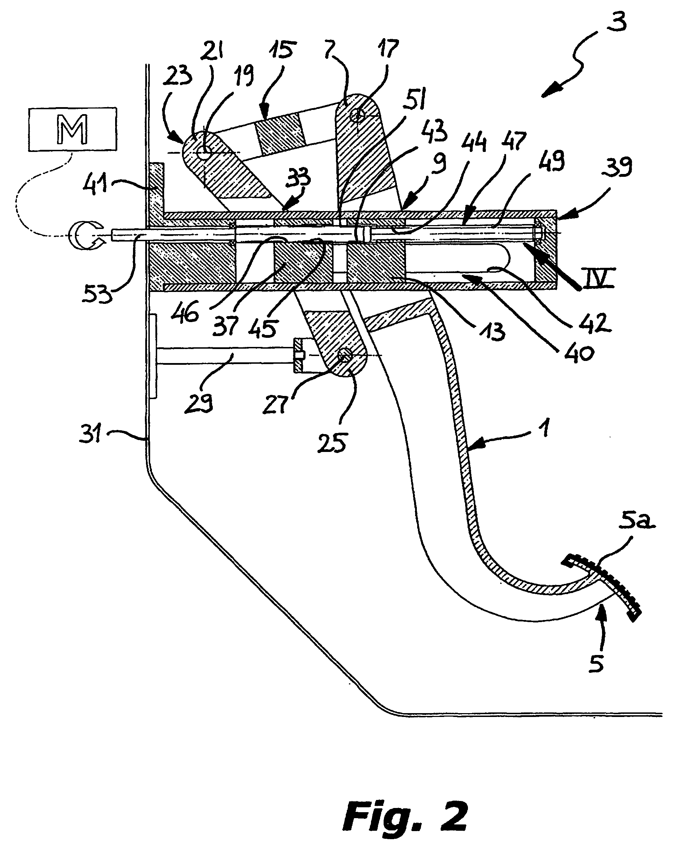

In both configurations described above, the translation direction defined by the hollow seat 40 of the structure 39 can be arranged with a downward inclination at the end opposite to the wall 31, with respect to the configuration illustrated in the figures 1 and 2, in order to be, for example, parallel to the axis of a push rod for driving the vehicle control members, which is inclined with respect to the horizontal. In this way, the ergonomic advantage to bring down the operating end of the pedal towards the passenger compartment floor is obtained in a simple manner, as a result of the approach of the pedal to the driver, during the carrying out of the adjustement.

## Claims

1. Device for adjusting the position of a pedal of a vehicle, comprising:
- a pedal (1) having a lower operating end (5) and an upper end (7) opposite to the operating end (5), to which a first pivot pin (17) is associated,
- a lever (23) having a first end (21) to which a second pivot pin (19) parallel to said first pin (17) is associated, and a second end (25) opposite to the first end (21) and connected to a control member (29) of a control device of the vehicle,
- a stem (15) for the articulated connection of the upper end (7) of the pedal (1) and of the first end (21) of the lever (23) through said first and second pin (17, 19), and
- position control means (13, 37, 47) interposed between the lever (23) and the pedal (1), which are adapted to cause a movement of the pedal (1) with respect to the lever (23) and which comprise a screw (47) associated to the pedal (1) and to the lever (23),
**characterized in that** the pedal (1) and the lever (23) have respective fulcra (9, 33) interposed between their opposite ends (5, 7, 21, 25), the screw (47) being connected to the pedal (1) and to the lever (23) at a zone close to said fulcra (9, 33) and being rotatably mounted with respect to a guide structure (39) fixed to the vehicle body (31) and defining a translation axis of the fulcra (9, 33), so that the rotation of the screw (47) causes a movement of the fulcrum (9) of the pedal (1) and of the fulcrum (33) of the lever (23) in the same direction with respect to the translation axis, the amount of the movement of the fulcrum (9) of the pedal (1) being greater than the amount of the movement of the fulcrum (33) of lever (23).

2. Device according to claim 1, **characterized in that** the screw (47) is axially connected to the guide structure (39).

3. Device according to claim 2, **characterized in that** the screw (47) has two different threads (49, 51) respectively in engagement with a first nut screw (44) articulated in proximity of the fulcrum (9) of the pedal (1) and with a second nut screw (46) articulated in proximity of the fulcrum (33) of the lever (23), wherein the thread (49) in engagement with the first nut screw (44) has a pitch greater than that of the thread (51) in engagement with the second nut screw (46).

4. Device according to claim 2 or 3, **characterized in that** the guide structure (39) has a rectilinear slit (42) the axis of which is parallel to said translation axis, said nut screws (44, 46) being associated to such a slit (42).

5. Device according to claim 4, **characterized in that** a pair of pivot pins (11, 35) for the articulation of the nut screws (44, 46) to the respective fulcra (9, 33) of the pedal (1) and the lever (23) are slidably mounted in the slit (42).

6. Device according to claim 1, **characterized in that** the screw is axially movable with respect to the guide structure.

7. Device according to claim 6, **characterized in that** the screw has two different threads respectively in engagement with a first nut screw fixed to the guide structure and with a second nut screw articulated in proximity of the fulcrum of the lever, and **in that** the screw has a free end connected in an articulated manner in proximity to the fulcrum of the pedal, the thread engaging the second nut screw having a smaller pitch and an opposite thread winding direction with respect to the thread engaging the first nut screw.

8. Device according to claim 3 or 7, **characterized in that** the ratio between the pitch of the thread (49) in engagement with the first nut screw (44) and the pitch of the thread (51) in engagement with the second nut screw (46) is comprised between approximately 1.5 and approximately 3.5.

9. Device according to claim 8, **characterized in that** the ratio between the pitch of the thread (49) in engagement with the first nut screw (44) and the pitch of the thread (51) in engagement with the second nut screw (46) has the value of approximately 2.25.

10. Pedal unit **characterized in that** it is provided with at least a pedal (1) having an adjusting device (3) according to anyone of the previous claims.

## Patentansprüche

1. Vorrichtung zum Einstellen der Position eines Pedals in einem Fahrzeug, umfassend:
- ein Pedal (1) mit einem unteren Betätigungsende (5) und einem oberen Ende (7), das dem Betätigungsende (5) gegenüberliegt und dem ein erster Drehzapfen (17) zugeordnet ist,
- einen Hebel (23) mit einem ersten Ende (21), dem ein zweiter Drehzapfen (19) zugeordnet ist, der parallel zu dem ersten Drehzapfen (17) verläuft, und mit einem zweiten Ende (25), das dem ersten Ende (21) gegenüberliegt und mit einem Betätigungselement (29) für ein Steuerorgan des Fahrzeugs verbunden ist,
- eine Stange (15) für die gelenkige Verbindung des oberen Endes (7) des Pedals (1) und des ersten Endes (21) des Hebels (23) mittels des ersten Drehzapfens (17) und des zweiten Drehzapfens (19),
- Mittel (13, 37, 47) für die Positionseinstellung, die zwischen dem Hebel (23) und dem Pedal (1) angeordnet und so ausgebildet sind, daß sie eine Verstellung des Pedals (1) relativ zu dem Hebel (23) bewirken und eine Schraube (47) aufweisen, die dem Pedal (1) und dem Hebel (23) zugeordnet ist,
**dadurch gekennzeichnet, daß** das Pedal (1) und der Hebel (23) jeweils einen Schwenkbereich (9, 33) aufweisen, welche zwischen ihren einander gegenüberliegenden Enden (5, 7; 21, 25) liegen, wobei die Schraube (47) mit dem Pedal (1) und dem Hebel (23) in der Nähe der Schwenkbereiche (9, 33) verbunden und drehbar in einem Führungsorgan (39) gelagert ist, welches an dem Fahrzeugkörper (31) befestigt ist und eine Verschiebeachse für die Schwenkbereiche (9, 33) definiert, so daß die Verdrehung der Schraube (47) eine Verschiebung des Schwenkbereichs (9) des Pedals (1) sowie des Schwenkbereiches (33) des Hebels (23) in derselben Richtung auf der Verschiebeachse herbeiführt, wobei der Verschiebeweg des Schwenkbereiches (9) des Pedals (1) größer als der Verschiebeweg des Schwenkbereiches (33) des Hebels (23) ist.

2. Vorrichtung nach Anspruch 1, **dadurch gekennzeichnet, daß** die Schraube (47) axial mit dem Führungsorgan (39) verbunden ist.

3. Vorrichtung nach Anspruch 2, **dadurch gekennzeichnet, daß** die Schraube (47) zwei unterschiedliche Gewinde (49, 51) hat, von denen eines in Eingriff mit einer ersten Gewindemutter (44) ist, welche in der Nähe des Schwenkbereiches (9) des Pedals (1) angelenkt ist, während das andere in Eingriff mit einer zweiten Gewindemutter (46) ist, die in der Nähe des Schwenkbereiches (33) des Hebels (23) angelenkt ist, wobei das Gewinde (49), welches mit der ersten Gewindemutter (44) in Eingriff ist, eine größere Steigung als das Gewinde (51) hat, welches mit der zweiten Gewindemutter (46) in Eingriff ist.

4. Vorrichtung nach Anspruch 2 oder 3, **dadurch gekennzeichnet, daß** das Führungsorgan (39) einen geradlinigen Schlitz (42) hat, dessen Achse parallel zu der Verschiebeachse verläuft, wobei die Gewindemuttern (44, 46) diesem Schlitz (42) zugeordnet sind.

5. Vorrichtung nach Anspruch 4, **dadurch gekennzeichnet, daß** in den Schlitz (42) zwei Schwenkbolzen (11, 35) verschiebbar eingreifen, die eine Schwenklagerung der Gewindemuttern (44, 46) des Pedals (1) und des Hebels (23) um den zugehörigen Schwenkbereich (9, 33) bilden.

6. Vorrichtung nach Anspruch 1, **dadurch gekennzeichnet, daß** die Schraube (46) relativ zu dem Führungsorgan axial beweglich ist.

7. Vorrichtung nach Anspruch 6, **dadurch gekennzeichnet, daß** die Schraube zwei unterschiedliche Gewinde hat, von denen eines in Eingriff mit einer ersten, an dem Führungsorgan befestigten Gewindemutter ist, während das zweite in Eingriff mit einer zweiten Gewindemutter ist, die in der Nähe des Schwenkbereichs des Hebels angelenkt ist, und daß die Schraube ein freies Ende aufweist, das in der Nähe des Schwenkbereiches des Pedals gelenkig mit diesem verbunden ist, wobei das in die zweite Gewindemutter eingreifende Gewinde eine kleinere Steigung und zu dem in die erste Gewindemutter eingreifenden Gewinde eine entgegengesetzte Gangrichtung hat.

8. Vorrichtung nach Anspruch 3 oder 7, **dadurch gekennzeichnet, daß** das Verhältnis zwischen der Steigung des in die erste Gewindemutter (44) eingreifenden Gewindes (49) und des in die zweite Gewindemutter (46) eingreifenden Gewindes (51) zwischen etwa 1,5 und 3,5 liegt.

9. Vorrichtung nach Anspruch 8, **dadurch gekennzeichnet, daß** das Verhältnis zwischen der Steigung des in die erste Gewindemutter (44) eingreifenden Gewindes (49) und des in die zweite Gewindemutter (46) eingreifenden Gewindes (51) bei etwa 2,25 liegt.

10. Pedaleinheit, **gekennzeichnet durch** wenigstens ein Pedal (1) mit einer Einstellvorrichtung (3) nach einem der vorhergehenden Ansprüche.

## Revendications

1. Dispositif permettant d'ajuster la position d'une pédale de véhicule, comprenant:
- une pédale (1) possédant une extrémité inférieure de manoeuvre (5) et une extrémité supérieure (7), opposée à l'extrémité de manoeuvre (5), à laquelle est associé un premier pivot (17),
- un levier (23) possédant une première extrémité (21) à laquelle est associé un deuxième pivot (19), parallèle au premier pivot (17), et une deuxième extrémité (25), opposée à la première extrémité (21) et reliée à un élément de commande (29) d'un dispositif de commande du véhicule,
- une tige (15) permettant la liaison articulée de l'extrémité supérieure (7) de la pédale (1) et de la première extrémité (21) du levier (23), par l'intermédiaire des premier et deuxième pivots (17, 19), et
- des moyens de contrôle de position (13, 37, 47) interposés entre le levier (23) et la pédale (1), qui sont adaptés pour entraîner un mouvement de la pédale (1) par rapport au levier (23) et qui comprennent une vis (47) associée à la pédale (1) et au levier (23), **caractérisé en ce que** la pédale (1) et le levier (23) ont des points d'appui (9, 33) respectifs placés entre leurs extrémités opposées (5, 7, 21, 25), la vis (47) étant reliée à la pédale (1) et au levier (23) dans une zone proche du point d'appui (9, 33) et étant montée rotative par rapport à une structure de guidage (39) fixée sur la structure (31) du véhicule et définissant un axe de translation des points d'appui (9, 33), de sorte que la rotation de la vis (47) entraîne un déplacement du point d'appui (9) de la pédale (1) et du point d'appui (33) du levier (23) dans la même direction par rapport à l'axe de translation, la distance de déplacement du point d'appui (9) de la pédale (1) étant supérieure à la distance de déplacement du point d'appui (33) du levier (23).

2. Dispositif selon la revendication 1, **caractérisé en ce que** la vis (47) est axialement reliée à la structure de guidage (39).

3. Dispositif selon la revendication 2, **caractérisé en ce que** la vis (47) présente deux filetages (49, 51) différents coopérant, respectivement, avec un premier écrou (44) monté à proximité du point d'appui (9) de la pédale (1) et avec un deuxième écrou (46) monté à proximité du point d'appui (33) du levier (23), le filetage (49) coopérant avec le premier écrou (44) présentant un pas supérieur au filetage (51) qui coopère avec le deuxième écrou (46).

4. Dispositif selon la revendication 2 ou 3, **caractérisé en ce que** la structure de guidage (39) présente une fente rectiligne (42) dont l'axe est parallèle à l'axe de translation, les écrous (44, 46) étant associés à cette fente (42).

5. Dispositif selon la revendication 4, **caractérisé en ce qu'**une paire de pivots (11, 35) permettant l'articulation des écrous (44, 46) avec les points d'appui respectifs (9, 33) de la pédale (1) et du levier (23) sont montés coulissants dans la fente (42).

6. Dispositif selon la revendication 1, **caractérisé en ce que** la vis peut se déplacer axialement par rapport à la structure de guidage.

7. Dispositif selon la revendication 6, **caractérisé en ce que** la vis présente deux filetages différents coopérant respectivement avec un premier écrou fixé sur la structure de guidage et avec un deuxième écrou monté à proximité du point d'appui du levier, et **en ce que** la vis présente une extrémité libre montée, de façon articulée, à proximité du point d'appui de la pédale, le filetage qui coopère avec le deuxième écrou présentant un pas inférieur et une direction d'enroulement du filetage opposée, par rapport au filetage qui coopère avec le premier écrou.

8. Dispositif selon la revendication 3 ou 7, **caractérisé en ce que** le rapport entre le pas du filetage (49) qui coopère avec le premier écrou (44) et le pas du filetage (51) qui coopère avec le deuxième écrou (46) est compris entre approximativement 1,5 et approximativement 3,5.

9. Dispositif selon la revendication 8, **caractérisé en ce que** le rapport entre le pas du filetage (49) qui coopère avec le premier écrou (44) et le pas du filetage (51) qui coopère avec le deuxième écrou (46) a une valeur d'approximativement 2,25.

10. Unité formant pédale, **caractérisée en ce qu'**elle est pourvue d'au moins une pédale (1) équipée d'un dispositif d'ajustement (3) selon l'une quelconque des revendications précédentes.
